# EUROPÄISCHE PATENTSCHRIFT

(11) **EP 1 362 961 B1**
(45) Veröffentlichungstag und Bekanntmachung des Hinweises auf die Patenterteilung: **09.11.2005**
(21) Anmeldenummer: 03003307.0
(22) Anmeldetag: 13.02.2003
(51) Int. Cl.: E03F 5/04, E04B 1/94

(54) **Bauelement für den Brandschutz einer Ablaufvorrichtung sowie Ablaufvorrichtung mit einem derartigen Bauelement**
Structural unit for fire protection of a draining device and draining device comprising that structural unit
Elément de construction pour la protection coupe-feu d' un dispositif d' écoulement et dispositif d'écoulement comprenant un tel élement

(30) Priorität: 29.04.2002 DE 10219086; 10.02.2003 DE 20302159 U
(43) Veröffentlichungstag der Anmeldung: 19.11.2003
(73) Patentinhaber: Dallmer GmbH & Co. KG, 59757 Arnsberg (DE)
(72) Erfinder: Dallmer, Johannes, Arnsberg 59757 (DE)
(74) Vertreter: Basfeld, Rainer

(56) Entgegenhaltungen:
- DE-U- 20 101 589
- US-A- 5 299 836

## Beschreibung

Die vorliegende Erfindung betrifft ein Bauelement für den Brandschutz einer Ablaufvorrichtung gemäß dem Oberbegriff des Anspruchs 1.

Ablaufvorrichtungen zur Montage in einer Boden- bzw. Deckenöffnung werden in den verschiedensten Bereichen eingesetzt, wobei sie in der Regel als Abfluss für Abwasser dienen, welches dann in eine angeschlossene Abwasserleitung einläuft. Da im Bereich der Ablaufvorrichtung ein Boden- bzw. Deckendurchbruch geschaffen wird, besteht hier die Gefahr, dass ein Brandherd in einem darunter liegenden Gebäudebereich durch die Boden- bzw. Deckenöffnung in einen über der Decke bzw. dem Boden liegenden Gebäudeabschnitt (Brandabschnitt) gelangt. Auch eine Brandabschottung durch Metallplatten oder dergleichen, wie sie früher teilweise verwendet wurde, bietet hier keinen ausreichenden Brandschutz, da Metall ein guter Wärmeleiter ist und somit aus dem Bereich, in dem sich der Brandherd befindet, die Hitze sich in unerwünschter Weise über das Metall in den über der Boden- oder Deckenöffnung liegenden Bereich ausbreitet. Dies lässt sich effektiv nur durch Verwendung geeigneter Brandschutzmaterialien verhindern, wie sie beispielsweise sogenannte Intumeszenz-Schaumstoffe darstellen, die bei Auftreten einer erhöhten Temperatur unter Volumenausdehnung aufschäumen und dadurch in der Lage sind, eine Boden- oder Deckenöffnung so brandsicher zu verschließen, dass weder Feuer noch Rauch in den darüber liegenden Bereich eindringen können.

Die DE 201 01 589 U1 beschreibt eine Ablaufvorrichtung der eingangs genannten Art, bei der eine ringförmige erste Brandschutzeinlage aus einem bei erhöhter Temperatur expandierenden Material um ein sich an der Unterseite des als Ablauftopf ausgeführten Ablaufelementes anschließendes Ablaufrohr gelegt wird. Das Ablaufrohr weist an der Oberseite einen topfartigen Flansch auf, um den herum eine zweite Brandschutzeinlage gelegt wird.

Diese vorbekannte Ablaufvorrichtung besteht jedoch aus relativ vielen Einzelteilen und ist recht kompliziert zu montieren. Zunächst werden Haltebügel über Schrauben an einem Metalltopf befestigt. In den Metalltopf wird das Ablaufrohr eingeschoben und beispielsweise durch eine Art Bajonettverschluss durch Drehen am Ablauftopf befestigt. Danach wird der Ablauftopf mit dem Ablaufrohr in die Deckenöffnung eingesetzt und über die Haltebügel befestigt. Anschließend wird eine Brandschutzmuffe, die das Brandschutzmaterial innenseitig enthält, von der Unterseite der Decke her auf das Ablaufrohr geschoben. Danach wird ein Schalungsblech mit einer mittigen Öffnung auf das Ablaufrohr geschoben und unterseitig an der Decke angeschraubt. Die verbleibende Öffnung um den Metalltopf herum wird mit einer Mörtelmasse verfüllt. Anschließend wird der Ablauftopf aus Kunststoff von der Oberseite der Decke her in den Metalltopf eingesetzt. Die aufwendigen Montagearbeiten am Bau bei der Installation dieser Ablaufvorrichtung sind sehr kostenintensiv.

Aus der GB 2 334 770 A ist eine Brandschutzmanschette bekannt, die um ein Rohr geschlossen werden kann. Die Brandschutzmanschette umfasst einen aus Metall bestehenden zylindrischen Teil, der aus zwei gegeneinander klappbaren Hälften besteht. An einem axialen Ende des zylindrischen Teils ist ein sich radial nach außen und nach innen erstreckender Flansch angebracht, der wie der zylindrische Teil selbst aus zwei gegeneinander klappbaren Hälften besteht. Die Innenseite des zylindrischen Teils ist bis zu dem Flansch mit einer Brandschutzmasse bedeckt.

Die Aufgabe der vorliegenden Erfindung besteht darin, ein für den Brandschutz einer Ablaufvorrichtung vorgesehenes Bauelement sowie eine mit einem derartigen Bauelement versehene Ablaufvorrichtung der eingangs genannten Art zu schaffen, die einfacher aufgebaut sind und eine wesentlich einfachere Montage ermöglichen. Eine weitere Aufgabe besteht in der Schaffung eines Bauelements der eingangs genannten Art, das unempfindlicher ist.

Die Lösung dieser Aufgaben liefert ein Bauelement gemäß Anspruch 1 und eine Ablaufvorrichtung gemäß Anspruch 14.

Gemäß Anspruch 1 ist vorgesehen, dass das Bauelement ein zur Verbindung mit weiteren Teilen der Ablaufvorrichtung geeignetes Rohrstück umfasst, das endseitig in die das Aufnahmemittel zumindest teilweise beschichtende Brandschutzmasse eingebettet ist und so von der Brandschutzmasse am Aufnahmemittel gehalten wird, dass das die Brandschutzmasse, das Aufnahmemittel und das Rohrstück umfassende Bauelement ein einstückiges Teil bildet. Dadurch wird aufgrund der erfindungsgemäßen Lösung ein einziges Bauteil erhalten, welches bereits das Aufnahmemittel, ggf. mit Befestigungsvorrichtungen zur Anbringung in der Deckenöffnung, die Brandschutzmasse in den gewünschten Bereichen und ein Rohrstück umfasst, in das man den in der Regel aus Kunststoff bestehenden Ablauftopf anschließend nur noch einsetzen muss. Erfindungsgemäß liegt also ein Teil vor, welches vom Hersteller vorgefertigt ist, so dass bei der anschließenden bauseitigen Montage durch Einsparung mehrerer Montageschritte der Aufwand wesentlich verringert und mögliche Montagefehler weitgehend verhindert werden können. Das das Aufnahmemittel, die Brandschutzmasse und das Rohrstück umfassende Bauelement wird in einem ersten Schritt in der Decken- bzw. Bodenöffnung montiert und kann in der Öffnung eingegossen werden. Eine zusätzliche Schalung ist dabei nicht erforderlich. Anschließend wird der in der Regel aus Kunststoff bestehende Ablauftopf einfach in das Rohrstück des Bauelements eingesetzt. Das Ablaufrohr kann von der Unterseite her auf einen beispielsweise am Ablauftopf unterseitig angebrachten Rohrstutzen aufgeschoben werden und der Montagevorgang ist damit abgeschlossen. Insbesondere besteht ein erfindungsgemäßes Bauelement aus weniger Teilen, als dies aus dem Stand der Technik bekannt ist. Weiterhin kann das Bauelement ohne Werkzeuge und weitere Hilfsmittel montiert werden.

Vorteilhafterweise kann das Rohrstück als Muffe ausgebildet sein.

Gemäß einer bevorzugten Ausführungsform der vorliegenden Erfindung besteht das Aufnahmemittel aus Metall. Hierbei kann vorgesehen sein, dass das Rohrstück das Aufnahmemittel axial verlängert.

Das Aufnahmemittel weist vorzugsweise einen radial nach außen ragenden Teller auf. Dieser Teller kann dann in der Decken- bzw. Bodenöffnung die Funktion einer Schalung übernehmen und von oben her eingefüllte Mörtelmasse abfangen und deren Austreten nach unten verhindern. Ein Vermörteln der Boden- bzw. Deckenöffnung ist nur im Bereich des Rohrstücks, nicht jedoch unterhalb des Tellers notwendig. Weiterhin erübrigen sich bei dem erfindungsgemäßen Bauelement zusätzliche Schalungsmittel.

Die Brandschutzmasse befindet sich bereits an oder in dem Bauelement und bildet gleichzeitig quasi das Bindeglied zwischen dem Aufnahmemittel und dem Rohrstück. Es ist daher nicht notwendig, dass die bei der Montage am Bau tätige Person eine Brandschutzeinlage in das Aufnahmemittel einlegt. Ebenso entfällt die Verwendung einer Brandschutzeinlage im Bereich des Ablaufrohrs oder das Aufschieben einer Brandschutzmuffe auf das Ablaufrohr.

Die Brandschutzmasse, die erfindungsgemäß integrativer Bestandteil des Bauelements ist, ist vorzugsweise wenigstens einseitig als Beschichtung auf dem Teller vorgesehen, wobei dies gleichzeitig den Vorteil hat, dass man bei der Herstellung der Ablaufvorrichtung das Rohrstück beispielsweise einfach nur auf die Beschichtung mit der Brandschutzmasse, welche noch weich ist, aufsetzen kann, so dass nach dem Aushärten der Brandschutzmasse das Rohrstück mit dem Aufnahmemittel dauerhaft einstückig verbunden ist.

Das Aufnahmemittel weist vorzugsweise einen axialen Stutzen auf, der mit dem radial nach außen ragenden Teller verbunden ist, wobei dieser axiale Stutzen vorzugsweise mindestens innenseitig ebenfalls mit Brandschutzmasse beschichtet ist. Vorzugsweise überragt der Teller das eingebettete Rohrstück radial nach außen hin und auch in diesem nach außen überragenden Bereich ist der Teller mindestens einseitig, vorzugsweise oberseitig mit Brandschutzmasse beschichtet. Der axiale Stutzen kann sich von dem Teller nach unten erstrecken.

Die Brandschutzmasse kann ein aus mehreren Komponenten bestehendes Material sein. Die Brandschutzmasse kann bei der Herstellung des Bauelements gießfähig sein, wodurch die Herstellung besonders einfach ist, da die Brandschutzmasse in den genannten Bereichen in das Aufnahmemittel eingebracht werden kann, wobei nach dem Erkalten die Brandschutzmasse als ein entsprechend geformtes festes kunststoffartiges Material vorliegt, welches Teil des Bauelements ist. Diese im Anwendungszustand formstabile Brandschutzmasse, die sich vorzugsweise auch im Bereich des axialen Stutzens des Aufnahmemittels auf der Innenseite befindet, quillt bei erhöhter Temperatur im Brandfall auf und verschließt den Durchgang des axialen Stutzens, wobei die Brandschutzmasse radial nach innen quillt. Danach ist die Deckenöffnung verschlossen, wobei die aufgequollene Brandschutzmasse eine Temperaturbarriere bildet. Versuche zeigen, dass selbst bei Temperaturen von ca. 1000° auf der Unterseite der Deckenöffnung auf deren Oberseite Raumtemperatur oder nur wenig erhöhte Temperatur herrscht, so dass eine Ausbreitung des Brandherds und eine Übertragung von Feuer und Rauch in andere Brandabschnitte verhindert wird.

Das vorzugsweise als Ablauftopf ausgebildete Ablaufelement, das in der Regel aus Kunststoff besteht, wird erfindungsgemäß einfach in das Bauelement von oben her eingesetzt, derart, dass das vorzugsweise als Muffe ausgebildete Rohrstück des Bauelements einen zylindrischen Teil des Ablauftopfs vorzugsweise formschlüssig aufnimmt. Das Rohrstück des erfindungsgemäßen Bauelements kann somit als Führung für den Ablauftopf dienen. Eine zusätzliche Brandschutzeinlage zwischen dem Kunststoffablauftopf und dem herstellerseitig vorgefertigten Bauelement ist nicht notwendig. Die sich nach der Montage unterhalb des Ablaufstopfs befindende Brandschutzmasse verschließt die verbleibende für das Abwasser vorgesehene Deckenöffnung. Ein ggf. am Kunststoffablauftopf angeformter Rohrstutzen aus Kunststoff würde durch die hohen Temperaturen wegschmelzen, was aber unerheblich ist, da die aufschäumende Brandschutzmasse ohnehin den Durchgang völlig verschließt. Die Brandschutzmasse befindet sich ja innenseitig in dem Stutzen, der nach der Montage den Kunststoffrohrstutzen des Ablauftopfs konzentrisch umgibt. Da der sich oberhalb des Stutzens befindliche Teller radial weiter nach außen ragt und sich vorzugsweise auch in diesem Bereich Brandschutzmasse befindet, verschließt diese Brandschutzmasse beim Aufschäumen auch den radial äußeren Teil der Öffnung. Das Metall, aus dem das Aufnahmemittel vorzugsweise gefertigt ist, bildet für die Brandschutzmasse sowohl im Bereich des Stutzens als auch im Bereich des Tellers ein äußeres Widerlager, so dass der Blähdruck des aufschäumenden Materials zielgerichtet radial nach innen ausgerichtet ist. Wenn das das Aufnahmemittel axial verlängernde Rohrstück durch die auftretende Hitze teilweise wegschmilzt, so ist dies unerheblich. Die Funktion des Rohrstücks besteht in erster Linie darin, den Kunststoffablauftopf bei der Montage zu führen und in zentrierter Position zu halten.

Wenn man für die Befestigung der Ablaufvorrichtung in der Decken-oder Bodenöffnung Flacheisen verwendet, können diese herstellerseitig an dem Teller des Aufnahmemittels bereits angebracht sein, so dass vor Ort ein weiterer Montageschritt, nämlich die Befestigung derartiger Flacheisen entfällt. Solche Flacheisen können beispielsweise am Aufnahmemittel angeschweißt oder ggf. angeschraubt sein.

Um zwischen dem Rohrstück des Bauelements und dem Ablauftopf aus Kunststoff abzudichten, kann man vorzugsweise das Rohrstück mit einer Nut ausbilden, die einen geeigneten Dichtungsring aufnimmt. Da der Ablauftopf aus Kunststoff einfach in das Rohrstück eingesetzt wird, kann dieser innerhalb des Rohrstücks axial verschoben und somit in eine an das Niveau auf der Oberseite der Boden- bzw. Deckenöffnung angepasste Höhenposition gebracht und in dieser Höhenposition durch geeignete Mittel ggf. fixiert werden. Der Dichtungsring kann gleichzeitig als Schallschutz und Geruchsverschluss dienen. Ein zusätzlicher Schallschutz ergibt sich durch die Brandschutzmasse im Teller.

Eine bevorzugte Weiterbildung der erfindungsgemäßen Lösung sieht vor, dass der Ablauftopf unterseitig wenigstens zwei angeformte Rohrstutzen aufweist, die zueinander konzentrisch sind. Dadurch wird die Möglichkeit geschaffen, beim Anschluss der Ablaufleitung wahlweise ein Ablaufrohr mit geringerem Durchmesser oder mit größerem Durchmesser anzuschließen, wobei dieses dann auf den entsprechend dimensionierten passenden Rohrstutzen aufgeschoben werden kann. Dadurch kann man Ablauftöpfe dieser Art vielseitiger verwenden, indem man zwei oder mehrere an die Durchmesser gängiger Abwasserleitungen angepasste Rohrstutzen am Ablauftopf anformt. Eine zusätzliche Möglichkeit besteht darin, dass man ein Ablaufrohr passend außen auf den axialen Stutzen des Aufnahmemittels aufschiebt. Bei zwei am Ablauftopf angeformten Rohrstutzen hat man dann bereits Anschlussmöglichkeiten für Ablaufrohre mit drei unterschiedlichen Durchmessern.

Eine mögliche bevorzugte Variante der Erfindung sieht vor, dass eine Dichtung, vorzugsweise eine Lippendichtung auf den oberen Rand des Rohrstücks aufsetzbar ist, wobei diese Dichtung an der Außenwandung eines Ablauftopfs abdichtet, der nicht passend in das Rohrstück eingesetzt wird, sondern gegenüber diesem etwas radiales Spiel hat. Diese radiale Distanz wird dann durch die Dichtung überbrückt, die gleichzeitig quasi für eine Klemmverbindung zwischen dem Ablauftopf und dem Rohrstück sorgt sowie als Geruchsverschluss und Schalldämpfer dient.

Eine bevorzugte Weiterbildung sieht vor, dass die Brandschutzmasse zumindest abschnittsweise mit einer Schutzschicht versehen ist. Hier können insbesondere die Bereiche der Brandschutzmasse, die mit Abwasser in Berührung kommen können, mit der Schutzschicht überzogen sein. Diese Schutzschicht kann aus Kunststoff, beispielsweise aus Silikon, Polyethylen oder Polypropylen bestehen. Die Schutzschicht kann vergleichsweise dünn ausgeführt sein und muss lediglich verhindern, dass die Brandschutzmasse mit Abwasser in Berührung kommt, weil das Abwasser je nach Art der verwendeten Brandschutzmasse diese unter Umständen beschädigen oder auflösen könnte.

Im Brandfall schmilzt oder verbrennt die Schutzschicht sofort, so dass die Brandschutzfunktion der Brandschutzmasse durch die Schutzschicht nicht beeinträchtigt wird.

Gegenstand der vorliegenden Erfindung ist neben dem zuvor beschriebenen Bauelement für den Brandschutz einer Ablaufvorrichtung die Ablaufvorrichtung selbst, welche neben dem Bauelement ein Ablaufelement aus einem deformierbaren Material umfasst, wobei im montierten Zustand das Aufnahmemittel und/oder das Rohrstück des Bauelements das Ablaufelement mindestens teilweise konzentrisch umgeben.

Vorteilhafterweise kann vorgesehen sein, dass das Ablaufelement als Ablauftopf oder Ablaufrohr ausgebildet ist und vorzugsweise aus Kunststoff besteht.

Gemäß einer Weiterbildung der Erfindung umfasst eine solche Ablaufvorrichtung neben dem vorgenannten Bauelement und einem Ablaufelement weiterhin wenigstens ein Ablaufrohr, welches mit wenigstens einem am Ablaufelement unterseitig angeformten Rohrstutzen zu einer strömungstechnischen Einheit verbindbar ist. Gemäß einer alternativen Lösung kann das Ablaufrohr auf einen der Rohrstutzen des Ablauftopfs oder gegebenenfalls in einen Stutzen des Ablauftopfs aufschiebbar bzw. einschiebbar sein. Gemäß einer anderen Variante kann auch ein Ablaufrohr auf den axialen Stutzen des Aufnahmemittels des Bauelements aufschiebbar sein.

Gegenstand der Erfindung ist somit sowohl das Bauelement für sich allein als auch eine Ablaufvorrichtung mit wenigstens einem solchen Bauelement und einem Ablaufelement.

Erfindungsgemäß kann vorgesehen sein, dass die Ablaufvorrichtung ein ringförmiges Verfüllhilfeteil umfasst. Gemäß einer Ausführungsform der vorliegenden Erfindung ist das Verfüllhilfeteil über den Stutzen in eine Position unterhalb des Tellers schiebbar, wobei das Verfüllhilfeteil vorzugsweise den Teller radial nach außen hin etwas überragt. Gemäß einer alternativen Ausführungsform der vorliegenden Erfindung ist das Verfüllhilfeteil zwischen Teller und Rohrstück angeordnet und mit diesen zusammen durch die Brandschutzmasse verbunden, wobei ebenfalls das Verfüllhilfeteil vorzugsweise den Teller radial nach außen hin etwas überragt. Derartige Verfüllhilfeteile können einen gegebenenfalls noch vorhandenen Umfangsspalt zwischen Teller und Decken- und Bodenöffnung überbrücken, so dass eine bessere Abdichtung gegen ein Austreten von Vergußmasse nach unten hin erzielt wird.

Vorzugsweise besteht das Verfüllhilfeteil aus einem flexiblen Material. Insbesondere kann das Verfüllhilfeteil mit Löchern und/oder Schlitzen versehen sein. Die Flexibilität und die Schlitze können eine bessere Einbringung des Verfüllhilfeteils in eine Decken- oder Bodenöffnung ermöglichen. Die Löcher können bei der zweiten Ausführungsform eine bessere Verbindung des Verfüllhilfeteils mit dem Teller bzw. mit dem Rohrstück durch die Brandschutzmasse gewährleisten.

Es besteht erfindungsgemäß die Möglichkeit, dass die Ablaufvorrichtung eine Schallschutzmanschette umfasst, die zwischen einem oberem sich radial nach außen erstreckenden flanschartigen Bereich des Ablauftopfes und dem Boden oder der Decke angeordnet sein kann. Diese Schallschutzmanschette, die beispielsweise aus Styropor bestehen kann, kann die Schalldämmung der erfindungsgemäßen Ablaufvorrichtung weiter verbessern.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die Erfindung anhand von Ausführungsbeispielen unter Bezugnahme auf die beiliegenden Zeichnungen näher beschrieben. Dabei zeigen
- Fig. 1a: eine Ablaufvorrichtung gemäß einer ersten Variante der Erfindung im Längsschnitt;
- Fig. 1b: eine Detailansicht gemäß 1b in Fig. 1a;
- Fig. 2: eine Ablaufvorrichtung gemäß Fig. 1 mit eingesetztem Ablauftopf im Einbauzustand in einer Deckenöffnung in Schnittdarstellung;
- Fig. 2a: eine Ablaufvorrichtung gemäß einer etwas abgewandelten Variante mit einem verglichen mit Fig. 2 etwas kleiner dimensioniertem Ablauftopf in Schnittdarstellung;
- Fig. 3: eine Ablaufvorrichtung gemäß einer etwas abgewandelten Variante als Bodenablauf z.B. für Duschabläufe;
- Fig. 4: eine Schnittdarstellung einer erfindungsgemäßen Ablaufvorrichtung gemäß einer etwas abgewandelten Variante als Bodenablauf für beispielsweise ein Parkdeck;
- Fig. 5a: eine Fig. 1a entsprechende Ansicht mit einem unterschiedlich gestalteten Verfüllhilfeteil;
- Fig. 5b: eine Detailansicht gemäß Vb in Fig. 5a;
- Fig. 6a: eine Draufsicht auf ein Verfüllhilfeteil, das in der Ablaufvorrichtung gemäß Fig. 5a eingebaut ist;
- Fig. 6b: eine Ansicht gemäß dem Pfeil Vlb in Fig. 6a.

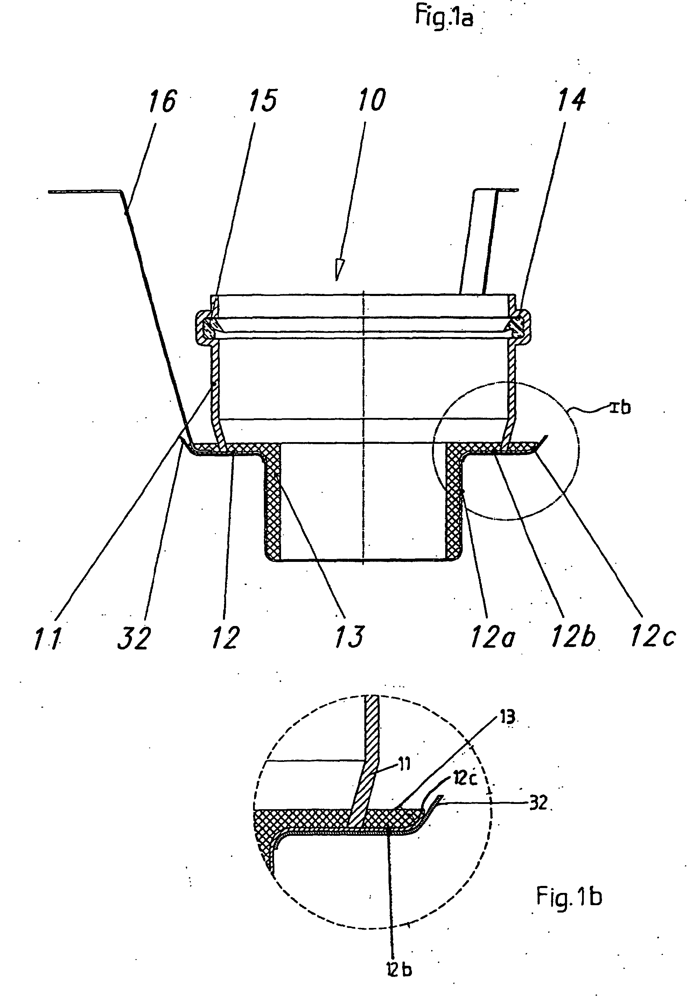

Zunächst wird auf Fig. 1a Bezug genommen. Die Darstellung zeigt das herstellerseitig vorgefertigte erfindungsgemäße Bauelement 10 einer erfindungsgemäßen Ablaufvorrichtung im Längsschnitt umfassend ein aus Metall bestehendes Aufnahmemittel 12, das innenseitig mit einer Brandschutzmasse 13 beschichtet ist und ein das Aufnahmemittel 12 axial verlängerndes als Muffe 11 ausgeführtes Rohrstück, dessen unteres Ende in die das Aufnahmemittel 12 beschichtende Brandschutzmasse eingebettet ist. Das Aufnahmemittel 12 besteht aus einem im Prinzip zylindrischen Stutzen 12a und einem an dessen im Einbauzustand oberen Ende radial von diesem Stutzen 12a nach außen ragenden Teller 12b mit einem die Muffe 11 nach außen überragenden Bereich 12c. Wie man sieht ist der Teller 12b an seiner Oberseite mit der Brandschutzmasse 13 versehen und auch der Stutzen 12a ist innenseitig mit dieser Brandschutzmasse 13 beschichtet. Die vorzugsweise aus Kunststoff bestehende Muffe 11 steht im Prinzip mit ihrem unteren stirnseitigen Ende auf dem Teller 12b des Aufnahmemittels 12 auf und wird durch die abgebundene Brandschutzmasse 13, die eine kunststoffartige Konsistenz aufweist, am Aufnahmemittel 12 gehalten, so dass das Ganze ein einstückiges Teil bildet.

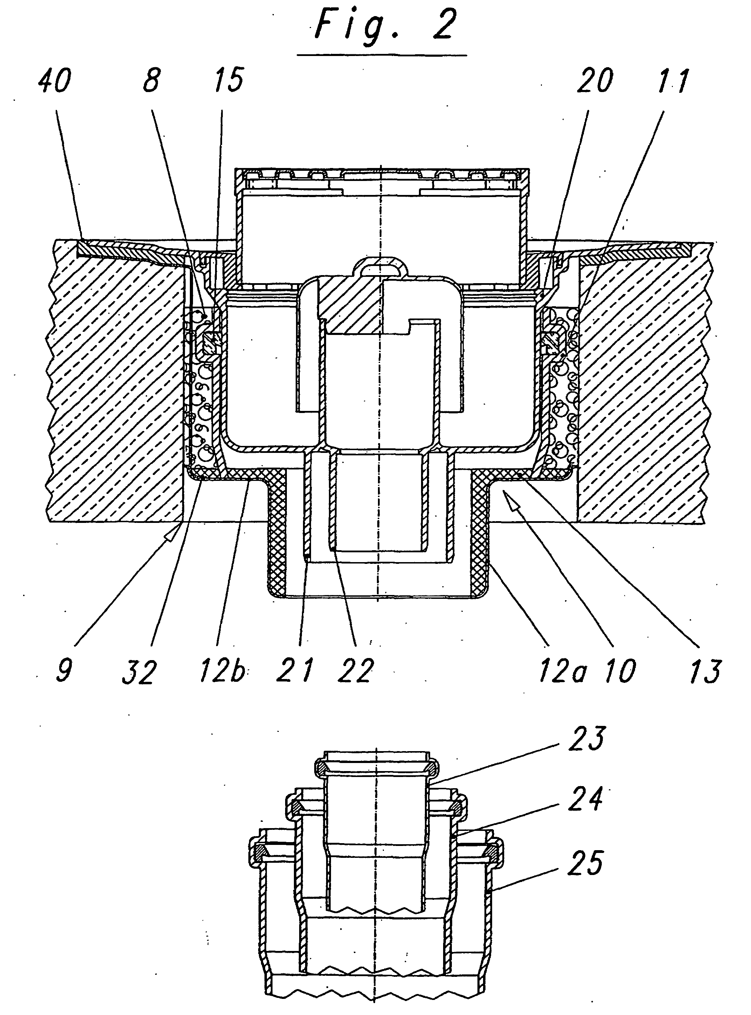

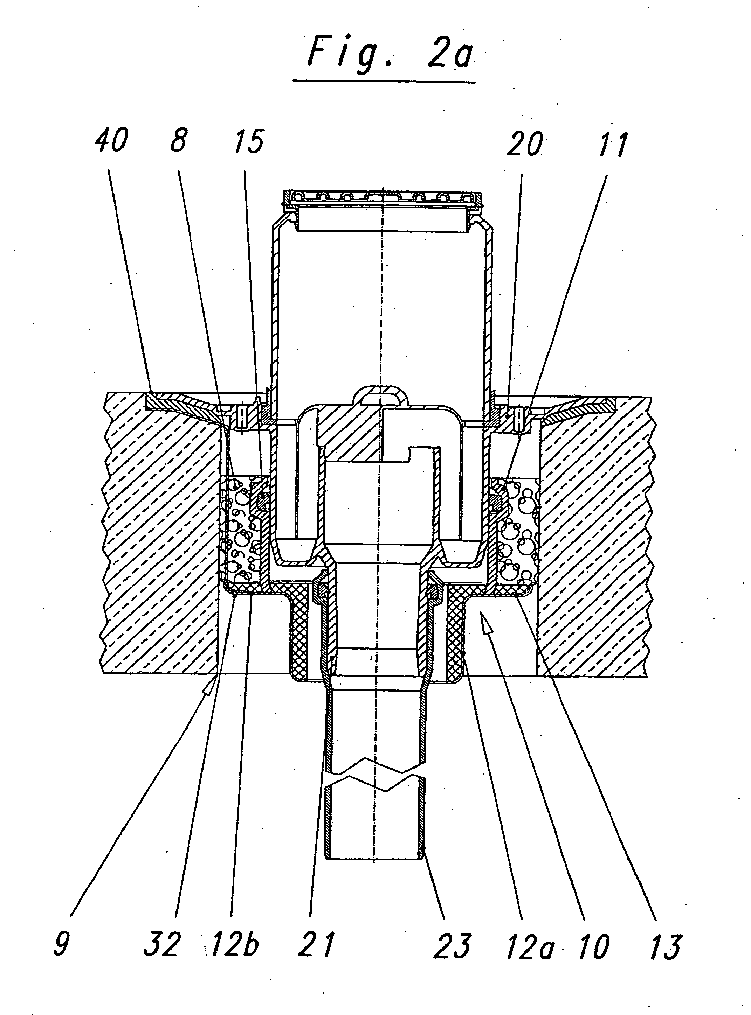

Um die Vorrichtung in einer Boden- oder Deckenöffnung zu befestigen, sind im äußeren Bereich des Tellers 12b des Aufnahmemittels 12 Befestigungseinrichtungen in Form von Flacheisen 16 angebracht, die sich von dem Teller 12b aus in einem stumpfen Winkel radial schräg nach außen und oben erstrecken. Es sind über den Umfang verteilt mehrere dieser Flacheisen 16 vorhanden, die am Teller 12b beispielsweise angeschweißt werden können. Die Flacheisen 16 sind an ihrem oberen Ende etwa horizontal abgeknickt, so dass man diese oberen Enden auf der Oberseite einer Ablaufebene im Randbereich um eine Deckenöffnung herum auflegen und/oder befestigen kann, um so die Ablaufvorrichtung zu halten, so wie dies in Fig. 2 dargestellt ist. Die Flacheisen 16 dienen hierbei als Mörtelanker und gleichzeitig auch als Höhenfixierungsteile.

Um eine solche Deckenöffnung oder Bodenöffnung 9 zu erhalten, wie sie in Fig. 2 dargestellt ist, wird in der Regel eine Kernbohrung vorgenommen. Nach dem Auflegen der Flacheisen 16 im Randbereich der Bodenöffnung kann man durch eine Vergussmasse 8 den verbleibenden Ringspalt zwischen Muffe 11 und der Deckenöffnung 9 verschließen. Man erkennt in Fig. 2, dass in dieser Einbausituation die auf den radialen Teller 12b des Aufnahmemittels 12 aufgetragene Brandschutzmasse 13 sich praktisch in dem gesamten Bereich des Ringspalts zwischen den Rohrstutzen 21 des Ablauftopfs 20 und dem unteren Abschnitt der Deckenöffnung 9 befindet, so dass dieser Bereich im Brandfall vollständig zuschäumt. Gleichzeitig dient der Teller 12b quasi als Schalung und fängt die Vergussmasse 8 ab.

In Fig. 2 und Fig. 2a ist eine Schallschutzmanschette 40 ersichtlich, die zwischen einem oberen flanschartigen sich radial nach außen erstreckenden Bereich des Ablauftopfes 20 und dem Boden oder der Decke angeordnet ist. Auf diese Weise liegt der flanschartige Bereich des Ablauftopfes 20 nicht direkt auf dem Beton des Bodens und der Decke auf, sondern nur indirekt über die Schallschutzmanschette 40, die auf diese Weise zur Schalldämmung beiträgt. Diese Schallschutzmanschette 40 kann natürlich bei allen anderen erfindungsgemäßen Ablaufvorrichtungen ebenfalls verwendet werden.

Die Schallschutzmanschette 40 kann insbesondere aus Styropor bestehen.

Es ist möglich, zusätzlich ein kragenartiges ringförmiges Verfüllhilfeteil 32 zu verwenden, welches bei der Ausführungsform gemäß Fig. 1a, Fig. 1b, Fig. 7a und Fig. 7b auf den Stutzen 12a aufgeschoben werden kann und sich dann unter den Teller 12b legt und diesen etwas radial nach außen hin überragt, so wie man dies in Figur 1b erkennen kann. Dieses auch in Figur 2 dargestellte Verfüllhilfeteil 32 kann beispielsweise aus Kunststoff bestehen und aus einem relativ dünnen Material gebildet werden und gegebenenfalls zusätzlich noch teilweise eingeschlitzt sein, so dass es flexibler wird. Dieses Verfüllhilfeteil überbrückt dann einen gegebenenfalls noch vorhandenen Umfangsspalt zwischen dem Teller 12b des Aufnahmemittels 12 und der Decken- oder Bodenöffnung 9, um so eine bessere Abdichtung gegen ein Austreten der Vergussmasse 8 nach unten hin zu erzielen. Das Verfüllhilfeteil 32 muss aber nicht notwendigerweise verwendet werden.

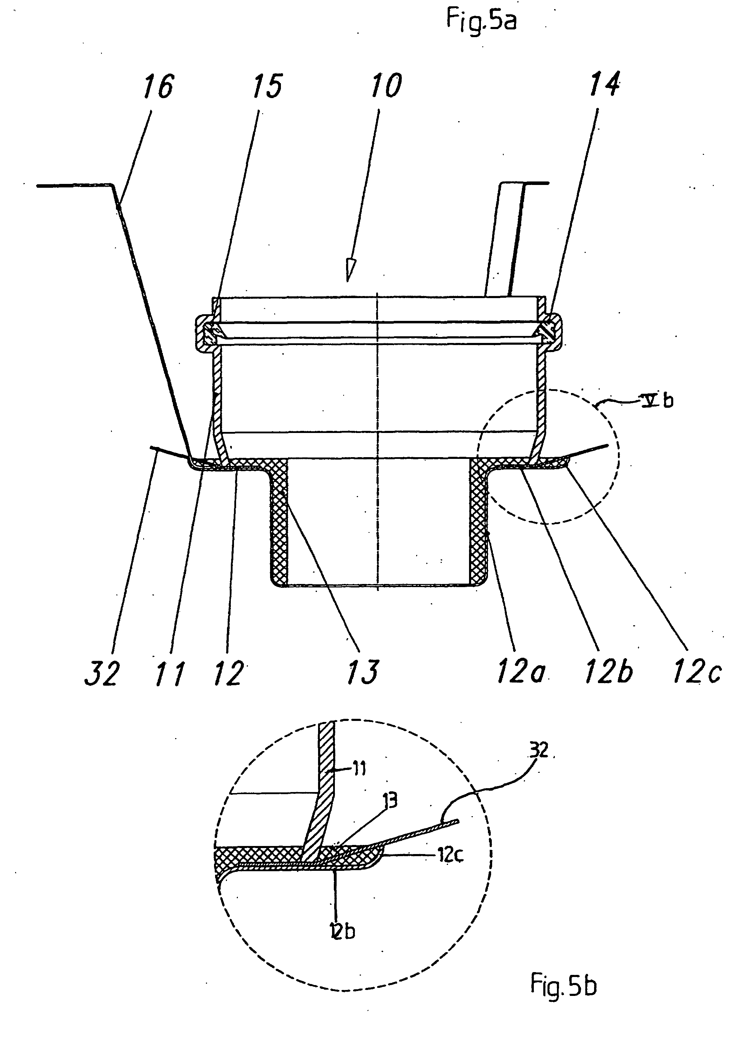

Aus Fig. 5a und 5b ist ein alternatives Verfüllhilfeteil 32 ersichtlich, dass oberhalb des Tellers 12b und unterhalb der Muffe 11 angeordnet ist. Dieses Verfüllhilfeteil 32 kann somit bei der Herstellung des erfindungsgemäßen Bauelements 10 zusammen mit dem Aufnahmemittel 12 und der Muffe 11 durch die Brandschutzmasse 13 zu einem Bauteil vergossen werden.

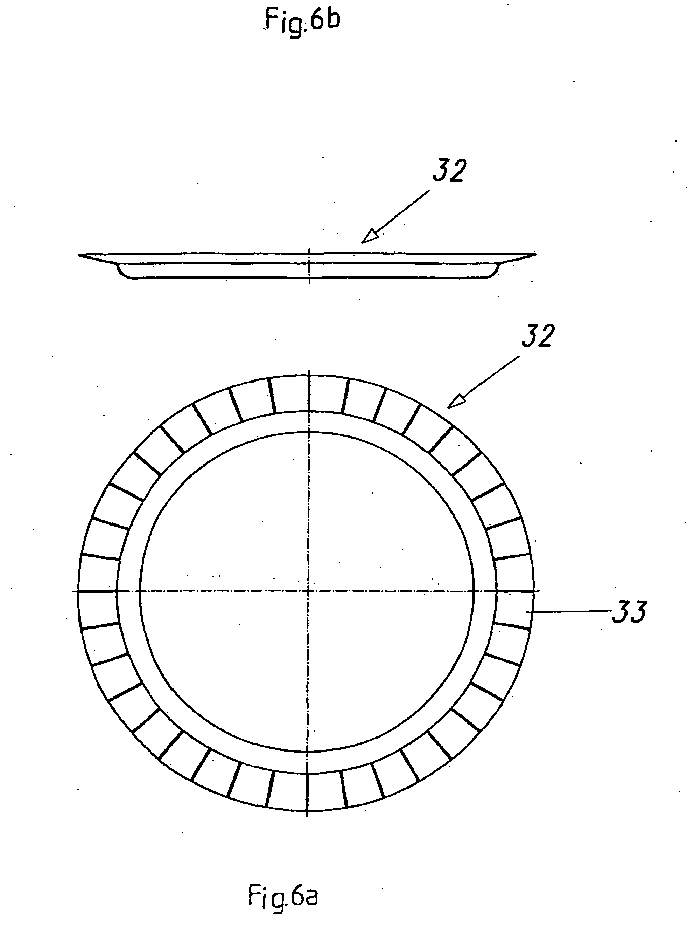

Aus Fig. 6a ist ersichtlich, dass die Verfüllhilfeteile 32 in ihrem radialen Außenbereich Schlitze 33 aufweisen können, die eine Einbringung in engere Decken- oder Bodenöffnungen 9 erleichtern können. Durch die Schlitze 33 wird erreicht, dass benachbart zu den Schlitzen 33 angeordnete Bereiche der Verfüllhilfeteile 32 einander teilweise überlappen können.

Es besteht weiterhin die Möglichkeit, dass das in Fig. 5a bzw. Fig. 5b in die erfindungsgemäße Ablaufvorrichtung eingebaute Verfüllhilfeteil 32 weiterhin Löcher aufweisen kann. Durch diese Löcher kann bei der Herstellung des erfindungsgemäßen Bauelements 10 Brandschutzmasse hindurchtreten, so dass eine bessere Verbindung des Verfüllhilfeteils 32 mit dem Aufnahmemittel12 und der Muffe 11 realisiert werden kann.

In Fig. 2 ist weiterhin erkennbar, dass der Ablauftopf 20 mit seinem Topfteil einfach in die Muffe 11 eingesetzt werden kann. Die Muffe 11 weist wie man auch aus Fig. 1 erkennen kann eine umlaufende Ringnut 14 auf, die einen Dichtungsring 15 aufnimmt, welcher wie man aus Fig. 2 sieht am Umfang des Ablauftops 20 abdichtet. Außerdem sind an dem Ablauftopf 20 mehrere Rohrstutzen 21, 22 unterseitig konzentrisch angeformt, so dass man verschiedene Rohre mit unterschiedlichen Durchmessern einer Ablaufleitung dort anschließen kann. In der Zeichnung gemäß Fig. 2 ist ein Ablaufrohr 23 mit beispielsweise 50 mm Durchmesser, ein Ablaufrohr 24 mit beispielsweise 75 mm Durchmesser und ein drittes Ablaufrohr 25 mit beispielsweise 110 mm Durchmesser eingezeichnet. Das letztgenannte Ablaufrohr 25 kann außen auf den axialen Stutzen 12a des Aufnahmemittels 12 aufgeschoben werden. Dies ist natürlich so zu verstehen, dass diese drei Anschlussmöglichkeiten alternativ bestehen, so dass in der Regel nur ein Ablaufrohr 23, 24 oder 25 angeschlossen wird. Man hat dann aber den Vorteil, dass die gleiche Ablaufvorrichtung in Einbausituationen mit verschiedenen Anforderungen eingesetzt werden kann.

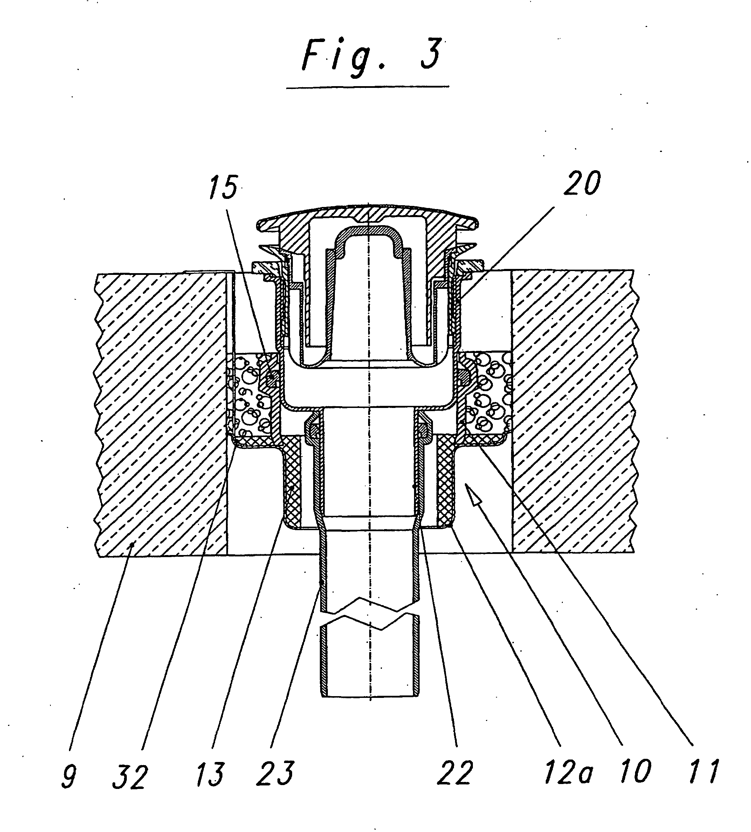

Nachfolgend wird eine Variante der Erfindung unter Bezugnahme auf Fig. 3 beschrieben. Auch hier umfasst die Ablaufvorrichtung das Bauelement 10, das im Prinzip genauso aufgebaut ist wie in der zuvor beschriebenen Variante nach Fig. 1, wobei lediglich der Durchmesser der Ablaufvorrichtung entsprechend der Bodenöffnung 9 bei dem Beispiel nach Fig. 3 etwas geringer ist. Außerdem unterscheidet sich die Ablaufvorrichtung insofern, als bei Fig. 3 die Muffe 11 etwas weiter innen angeordnet ist und nahezu mit dem axialen Stutzen 12a des Aufnahmemittels 12 fluchtet. Die Befestigung der Ablaufvorrichtung erfolgt in gleicher Weise wie zuvor beschrieben. Der Ablauftopf 20 aus Kunststoff wird wiederum in die Muffe 11 der zuvor montierten Vorrichtung eingesetzt. Allerdings ist der Ablauftopf 20 bei dieser Variante etwas anders ausgebildet, da es sich um einen Bodenablauf für eine Dusche handelt. Am Umfang des Ablauftopfs 20 liegt wiederum eine Dichtung an. Ein Ablaufrohr 23 ist außen auf einen axialen Rohrstutzen 22 des Ablauftopfs 20 aufgeschoben. Im Brandfall quillt die Brandschutzmasse 13, die sich im Bereich des axialen Stutzens 12a befindet, radial nach innen.

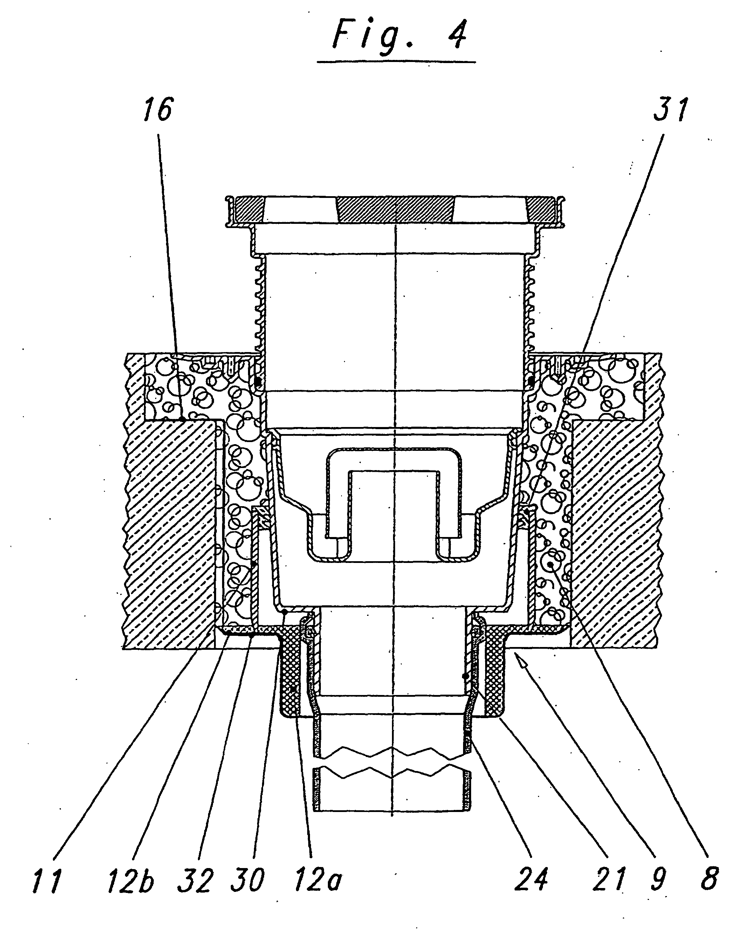

Eine weitere Variante der Erfindung wird nachfolgend unter Bezugnahme auf Fig. 4 näher erläutert. In diesem Fall handelt es sich um eine Ablaufvorrichtung für einen Bodenablauf mit Brandschutz für beispielsweise ein Parkdeck. Die Ablaufvorrichtung mit der Muffe 11 und dem Aufnahmemittel 12 ist im Prinzip ähnlich ausgebildet wie bei der Darstellung gemäß Fig. 1, wobei bei der Variante nach Fig. 4 lediglich der Durchmesser der Ablaufvorrichtung insgesamt entsprechend dem Durchmesser der Bodenöffnung 9 etwas größer ist. Der Ablauftopf 30 für den Parkdeckablauf ist etwas anders ausgebildet als in den zuvor beschriebenen Ausführungsbeispielen. Wie man aus der Zeichnung erkennt, ist in diesem Fall der Topfteil des Ablauftopfs 30 nicht passend in die Muffe 11 eingesetzt, sondern es verbleibt ein geringfügiger radialer Spielraum. Dieser Ringspalt wird jedoch durch eine Lippendichtung 31 ausgefüllt, die auf den oberen Rand der Muffe 11 aufgesetzt ist und gegenüber der Außenwandung des konzentrisch in die Muffe 11 eingesetzten Ablauftopfs 30 abdichtet. Der Ablauftopf 30 hat wiederum unterseitig einen angeformten Rohrstutzen 21, auf den außen ein Ablaufrohr einer Abwasserleitung 24 aufgeschoben ist. Auch hier wird wiederum die verbleibende Öffnung oberhalb des Tellers 12b, das heißt der Ringspalt zwischen der Muffe 11 und der Bodenöffnung 9, mit einer Vergussmasse 8 verfüllt. Zur Befestigung der Ablaufvorrichtung in der Bodenöffnung 9 vor dem Verfüllen mit der Vergussmasse können wiederum an der Vorrichtung angebrachte Flacheisen 16 oder dergleichen dienen.

Es besteht weiterhin die Möglichkeit die Brandschutzmasse 13 in den Bereichen, die mit Abwasser in Berührung kommen könnten, mit einer Schutzschicht zu überziehen. Die Schutzschicht kann sehr dünn sein und aus Kunststoff bestehen, beispielsweise aus Silikon, Polyethylen oder Polypropylen. Die Kunststoffschicht kann beispielsweise mit eingegossen werden.

## Patentansprüche

1. Bauelement für den Brandschutz einer Ablaufvorrichtung umfassend:
- ein hitzebeständiges Aufnahmemittel (12) sowie
- eine bei erhöhter Temperatur aufschäumende Brandschutzmasse (13) im Bereich des Aufnahmemittels (12),
**dadurch gekennzeichnet, dass**
- das Bauelement ein zur Verbindung mit weiteren Teilen der Ablaufvorrichtung geeignetes Rohrstück umfasst,
- das endseitig in die das Aufnahmemittel (12) zumindest teilweise beschichtende Brandschutzmasse (13) eingebettet ist
- und so von der Brandschutzmasse (13) am Aufnahmemittel (12) gehalten wird, dass das die Brandschutzmasse (13), das Aufnahmemittel (12) und das Rohrstück umfassende Bauelement (10) ein einstückiges Teil bildet.

2. Bauelement nach Anspruch 1, **dadurch gekennzeichnet, dass** das Rohrstück als Muffe (11) ausgebildet ist.

3. Bauelement nach einem der Ansprüche 1 oder 2, **dadurch gekennzeichnet, dass** das Aufnahmemittel (12) aus Metall besteht.

4. Bauelement nach einem der Ansprüche 1 bis 3, **dadurch gekennzeichnet, dass** das Rohrstück das Aufnahmemittel (12) axial verlängert.

5. Bauelement nach einem der Ansprüche 1 bis 4, **dadurch gekennzeichnet, dass** das Aufnahmemittel (12) einen Stutzen (12a) und einen an dessen einem Ende radial von diesem nach außen ragenden Teller (12b) aufweist, wobei wenigstens der Teller (12b) wenigstens einseitig mit der Brandschutzmasse (13) beschichtet ist und wobei das Rohrstück endseitig in diese Brandschutzmasse (13) eingebettet ist.

6. Bauelement nach Anspruch 5, **dadurch gekennzeichnet, dass** das Rohrstück stirnseitig auf dem Teller (12b) aufsteht und durch die abgebundene Brandschutzmasse (13) am Aufnahmemittel (12) gehalten ist.

7. Bauelement nach einem der Ansprüche 5 oder 6, **dadurch gekennzeichnet, dass** der Teller (12b) des Aufnahmemittels (12) das Rohrstück ein Stück radial nach außen hin überragt und der Teller (12b) auch in diesem nach außen überragenden Bereich (12c) mit Brandschutzmasse (13) beschichtet ist.

8. Bauelement nach einem der Ansprüche 5 bis 7, **dadurch gekennzeichnet, dass** der axiale Stutzen (12a) des Aufnahmemittels (12) innenseitig mit Brandschutzmasse beschichtet ist.

9. Bauelement nach einem der Ansprüche 1 bis 8, **dadurch gekennzeichnet, dass** an dem Aufnahmemittel (12), vorzugsweise im äußeren Bereich des Tellers (12b), Befestigungseinrichtungen, vorzugsweise in Form von Flacheisen (16), angebracht sind, die sich vorzugsweise vom Teller (12b) aus in einem stumpfen Winkel radial schräg nach außen und oben erstrecken.

10. Bauelement nach Anspruch 9, **dadurch gekennzeichnet, dass** die Befestigungseinrichtungen, vorzugsweise die Flacheisen (16), am Teller (12b) angeschweißt oder angeschraubt sind.

11. Bauelement nach einem der Ansprüche 1 bis 10, **dadurch gekennzeichnet, dass** das Rohrstück eine Nut (14) aufweist, geeignet einen Dichtungsring (15) aufzunehmen.

12. Bauelement nach einem der Ansprüche 1 bis 11, **dadurch gekennzeichnet, dass** das Rohrstück aus Kunststoff besteht.

13. Bauelement nach einem der Ansprüche 1 bis 12, **dadurch gekennzeichnet, dass** die Brandschutzmasse (13) zumindest abschnittsweise mit einer Schutzschicht versehen ist.

14. Ablaufvorrichtung zur Montage in einer Boden- bzw. Deckenöffnung umfassend ein Bauelement nach einem der Ansprüche 1 bis 13 sowie ein Ablaufelement aus einem deformierbaren Material, **dadurch gekennzeichnet, dass** im montierten Zustand das Aufnahmemittel (12) und/oder das Rohrstück das Ablaufelement mindestens teilweise konzentrisch umgeben.

15. Ablaufvorrichtung nach Anspruch 14, **dadurch gekennzeichnet, dass** das Ablaufelement innerhalb des Rohrstücks axial verschiebbar und somit höhenverstellbar ist.

16. Ablaufvorrichtung nach einem der Ansprüche 14 oder 15, **dadurch gekennzeichnet, dass** das Ablaufelement als Ablauftopf (20, 30) oder Ablaufrohr ausgebildet ist und vorzugsweise aus Kunststoff besteht.

17. Ablaufvorrichtung nach einem der Ansprüche 14 bis 16, **dadurch gekennzeichnet, dass** diese weiterhin wenigstens ein Ablaufrohr (23, 24, 25) aufweist, welches mit wenigstens einem am Ablaufelement unterseitig angeformten Rohrstutzen (21, 22) zu einer strömungstechnischen Einheit verbindbar ist.

18. Ablaufvorrichtung nach einem der Ansprüche 14 bis 17, **dadurch gekennzeichnet, dass** das Ablaufelement passend in den oberen Bereich des Rohrstücks einschiebbar ist.

19. Ablaufvorrichtung nach einem der Ansprüche 16 bis 18, **dadurch gekennzeichnet, dass** der Ablauftopf (20) wenigstens zwei unterseitig angeformte Rohrstutzen (21, 22) aufweist, die zueinander konzentrisch sind und die so dimensioniert sind, dass wahlweise ein erstes Ablaufrohr (23) mit geringerem Durchmesser oder ein zweites Ablaufrohr (24) mit größerem Durchmesser auf den inneren Stutzen (22) oder auf den äußeren Stutzen (21) aufschiebbar ist.

20. Ablaufvorrichtung nach einem der Ansprüche 14 bis 19, **dadurch gekennzeichnet, dass** ein Ablaufrohr (25) vorgesehen ist, welches passend außen auf den axialen Stutzen (12a) des Aufnahmemittels (12) aufschiebbar ist.

21. Ablaufvorrichtung nach einem der Ansprüche 14 bis 20, **dadurch gekennzeichnet, dass** eine Dichtung, vorzugsweise eine Lippendichtung (31) auf den oberen Rand des Rohrstücks aufsetzbar ist, geeignet an der Außenwandung eines in das Rohrstück konzentrisch, aber mit etwas Abstand einsetzbaren Ablauftopfs (30) abzudichten.

22. Ablaufvorrichtung nach einem der Ansprüche 14 bis 21, **dadurch gekennzeichnet, dass** die Ablaufvorrichtung ein ringförmiges Verfüllhilfeteil (32) umfasst.

23. Ablaufvorrichtung nach Anspruch 22, **dadurch gekennzeichnet, dass** das Verfüllhilfeteil (32) über den Stutzen (12a) in eine Position unterhalb des Tellers (12b) schiebbar ist, wobei das Verfüllhilfeteil (32) vorzugsweise den Teller (12b) radial nach außen hin etwas überragt.

24. Ablaufvorrichtung nach Anspruch 22, **dadurch gekennzeichnet, dass** das Verfüllhilfeteil (32) zwischen Teller (12b) und Rohrstück angeordnet ist und mit diesen zusammen durch die Brandschutzmasse (13) verbunden ist, wobei das Verfüllhilfeteil (32) vorzugsweise den Teller (12b) radial nach außen hin etwas überragt.

25. Ablaufvorrichtung nach einem der Ansprüche 22 bis 24, **dadurch gekennzeichnet, dass** das Verfüllhilfeteil (32) aus einem flexiblen Material besteht.

26. Ablaufvorrichtung nach einem der Ansprüche 22 bis 25, **dadurch gekennzeichnet, dass** das Verfüllhilfeteil (32) mit Löchern und/oder Schlitzen (33) versehen ist.

27. Ablaufvorrichtung nach einem der Ansprüche 14 bis 26, **dadurch gekennzeichnet, dass** die Ablaufvorrichtung eine Schallschutzmanschette (40) umfasst, die zwischen einem oberen sich radial nach außen erstreckenden flanschartigen Bereich des Ablauftopfes (20) und dem Boden oder der Decke angeordnet sein kann.

## Claims

1. Structural unit for fire protection of a draining device comprising
- a heat-resistant receiving means (12) and
- an intumescent composition (13), which expands at elevated temperature, in the region of the receiving means (12),
**characterized in that**
- the structural unit comprises a piece of pipe suitable for connection to further parts of the draining device,
- which piece of pipe is embedded at the end in the intumescent composition (13) at least partly lining the receiving means (12)
- and is held by the intumescent composition (13) on the receiving means (12) in such a way that the structural unit (10) comprising the intumescent composition (13), the receiving means (12) and the piece of pipe forms a one-piece part.

2. Structural unit according to Claim 1, **characterized in that** the piece of pipe is formed as a collar (11).

3. Structural unit according to either of Claims 1 and 2, **characterized in that** the receiving means (12) consists of metal.

4. Structural unit according to one of Claims 1 to 3, **characterized in that** the piece of pipe axially extends the receiving means (12).

5. Structural unit according to one of Claims 1 to 4, **characterized in that** the receiving means (12) has a stub (12a) and a plate (12b) protruding radially outwards from the latter at its one end, at least the plate (12b) being lined at least on one side with the intumescent composition (13) and the piece of pipe being embedded at the end in this intumescent composition (13).

6. Structural unit according to Claim 5, **characterized in that** the piece of pipe stands at the end on the plate (12b) and is held on the receiving means (12) by the set intumescent composition (13).

7. Structural unit according to either of Claims 5 and 6, **characterized in that** the plate (12b) of the receiving means (12) protrudes radially outwards a little beyond the piece of pipe and the plate (12b) is also lined with the intumescent composition (13) in this outwardly protruding region (12c).

8. Structural unit according to one of Claims 5 to 7, **characterized in that** the axial stub (12a) of the receiving means (12) is lined on the inside with intumescent composition.

9. Structural unit according to one of Claims 1 to 8, **characterized in that** fastening devices, preferably in the form of flat bars (16), which preferably extend obliquely outwards and upwards at an obtuse angle radially from the plate (12b), are attached to the receiving means (12), preferably in the outer region of the plate (12b).

10. Structural unit according to Claim 9, **characterized in that** the fastening devices, preferably the flat bars (16), are welded or screwed to the plate (12b).

11. Structural unit according to one of Claims 1 to 10, **characterized in that** the piece of pipe has a groove (14), suitable for receiving a sealing ring (15).

12. Structural unit according to one of Claims 1 to 11, **characterized in that** the piece of pipe consists of plastic.

13. Structural unit according to one of Claims 1 to 12, **characterized in that** the intumescent composition (13) is provided at least in certain portions with a protective layer.

14. Draining device for fitting in an aperture in a floor or ceiling, comprising a structural unit according to one of Claims 1 to 13 and a draining element of deformable material, **characterized in that**, in the fitted state, the receiving means (12) and/or the piece of pipe concentrically surround the draining element at least partially.

15. Draining device according to Claim 14, **characterized in that** the draining element is axially displaceable, and consequently adjustable in height, inside the piece of pipe.

16. Draining device according to either of Claims 14 and 15, **characterized in that** the draining element is formed as a drain cup (20, 30) or drain pipe and preferably consists of plastic.

17. Draining device according to one of Claims 14 to 16, **characterized in that** it also has at least one drain pipe (23, 24, 25) which can be connected by at least one pipe stub (21, 22), formed on the underside of the draining element, to a technical flow-related unit.

18. Draining device according to one of Claims 14 to 17, **characterized in that** the draining element can be pushed snugly into the upper region of the piece of pipe.

19. Draining device according to one of Claims 16 to 18, **characterized in that** the drain cup (20) has at least two pipe stubs (21, 22) formed on the underside, which are concentric to each other and dimensioned in such a way that, according to choice, a first drain pipe (23) with a smaller diameter or a second drain pipe (24) with a larger diameter can be pushed onto the inner stub (22) or onto the outer stub (21).

20. Draining device according to one of Claims 14 to 19, **characterized in that** a drain pipe (25) which can be pushed snugly onto the outside of the axial stub (12a) of the receiving means (12) is provided.

21. Draining device according to one of Claims 14 to 20, **characterized in that** a seal, preferably a lip seal (31), can be placed onto the upper edge of the piece of pipe, suitable for sealing on the outer wall of a drain cup (30), which can be inserted concentrically into the piece of pipe, but with some spacing.

22. Draining device according to one of Claims 14 to 21, **characterized in that** the draining device comprises an annular gap-filling assisting part (32).

23. Draining device according to Claim 22, **characterized in that** the gap-filling assisting part (32) can be pushed over the stub (12a) into a position beneath the plate (12b), the gap-filling assisting part (32) preferably protruding radially outwards somewhat beyond the plate (12b).

24. Draining device according to Claim 22, **characterized in that** the gap-filling assisting part (32) is arranged between the plate (12b) and the piece of pipe and is connected together with them by the intumescent composition (13), the gap-filling assisting part (32) preferably protruding radially outwards somewhat beyond the plate (12b).

25. Draining device according to one of Claims 22 to 24, **characterized in that** the gap-filling assisting part (32) consists of a flexible material.

26. Draining device according to one of Claims 22 to 25, **characterized in that** the gap-filling assisting part (32) is provided with holes and/or slits (33).

27. Draining device according to one of Claims 14 to 26, **characterized in that** the draining device comprises a soundproofing collar (40), which can be arranged between an upper, radially outwardly extending flange-like region of the drain cup (20) and the floor or ceiling.

## Revendications

1. Elément de construction pour la protection contre l'incendie d'un dispositif d'évacuation, comprenant :
- un moyen support résistant à la chaleur (12) ainsi
- qu'une masse anti-feu (13) moussant en cas de hausse de la température au niveau du moyen support (12),
**caractérisé en ce que**
- l'élément de construction comprend une pièce tubulaire apte à être reliée à d'autres pièces du dispositif d'évacuation,
- laquelle pièce tubulaire est encastrée dans la masse anti-feu (13) enrobant du moins partiellement le moyen support (12)
- et étant maintenue par la masse anti-feu (13) sur le moyen support (12) de manière à ce que l'élément de construction (10) comportant la masse anti-feu (13), le moyen support (12) et la pièce tubulaire forme une pièce unique.

2. Elément de construction selon la revendication 1, **caractérisé en ce que** la pièce tubulaire est réalisée sous forme d'un manchon (11).

3. Elément de construction selon une des revendications 1 ou 2, **caractérisé en ce que** le moyen support (12) est composé de métal.

4. Elément de construction selon une des revendications 1 à 3, **caractérisé en ce que** la pièce tubulaire prolonge axialement le moyen support (12).

5. Elément de construction selon une des revendications 1 à 4, **caractérisé en ce que** l'élément support (12) présente un tronc (12a) et un plateau (12b) dépassant radialement de celui-ci vers l'extérieur à une de ses extrémités, au moins le plateau (12b) étant enrobé au moins d'un côté par la masse anti-feu (13) et la pièce tubulaire étant encastrée du côté de son extrémité dans cette masse anti-feu (13).

6. Elément de construction selon la revendication 5, **caractérisé en ce que** la pièce tubulaire est posée côté frontal sur le plateau (12b) et est maintenue sur le moyen support (12) par la masse anti-feu rattachée (13).

7. Elément de construction selon une des revendications 5 ou 6, **caractérisé en ce que** le plateau (12b) du moyen support (12) déborde de la pièce tubulaire d'une longueur radialement vers l'extérieur et que le plateau (12b) est enrobé de masse anti-feu (13) même dans cette zone (12c) débordant vers l'extérieur.

8. Elément de construction selon une des revendications 5 à 7, **caractérisé en ce que** le tronc axial (12a) du moyen support (12) est enrobé sur son côté intérieur de masse anti-feu.

9. Elément de construction selon une des revendications 1 à 8, **caractérisé en ce que**, sur le moyen support (12), de préférence sur l'extérieur du plateau (12b), sont installés des dispositifs de fixation, se présentant de préférence sous la forme de fers plats (16), qui s'étendent de préférence depuis le plateau (12b) suivant un angle obtus radialement à l'oblique vers l'extérieur et vers le haut.

10. Elément de construction selon la revendication 9, **caractérisé en ce que** les dispositifs de fixation, de préférence les fers plats (16), sont soudés ou vissés au plateau (12b).

11. Elément de construction selon une des revendications 1 à 10, **caractérisé en ce que** la pièce tubulaire présente une rainure (14) apte à recevoir une bague d'étanchéité (15).

12. Elément de construction selon une des revendications 1 à 11, **caractérisé en ce que** la pièce tubulaire est en matière plastique.

13. Elément de construction selon une des revendications 1 à 12, **caractérisé en ce que** la masse anti-feu (13) est pourvue du moins par sections d'une couche protectrice.

14. Dispositif d'évacuation à monter dans une ouverture de sol ou de plafond, comprenant un élément de construction selon une des revendications 1 à 13 ainsi qu'un élément d'évacuation composé d'une matière déformable, **caractérisé en ce qu'**à l'état monté, le moyen support (12) et/ou la pièce tubulaire entourent du moins partiellement concentriquement l'élément d'évacuation.

15. Dispositif d'évacuation selon la revendication 14, **caractérisé en ce que** l'élément d'évacuation est déplaçable axialement à l'intérieur de la pièce tubulaire et est donc réglable en hauteur.

16. Dispositif d'évacuation selon une des revendications 14 ou 15, **caractérisé en ce que** l'élément d'évacuation est réalisé sous forme d'une cuve d'évacuation (20, 30) ou d'un tuyau d'évacuation et est composé de préférence de matière plastique.

17. Dispositif d'évacuation selon une des revendications 14 à 16, **caractérisé en ce que** celui-ci présente en outre au moins un tuyau d'évacuation (23, 24, 25) qui peut être relié à au moins un tronc de tuyau (21, 22) formé en bas sur l'élément d'évacuation pour former une unité technique d'écoulement.

18. Dispositif d'évacuation selon une des revendications 14 à 17, **caractérisé en ce que** l'élément d'évacuation peut être inséré de manière ajustée dans la zone supérieure de la pièce tubulaire.

19. Dispositif d'évacuation selon une des revendications 16 à 18, **caractérisé en ce que** la cuve d'évacuation (20) présente au moins deux troncs de tuyau (21, 22) formés en bas qui sont concentriques l'un par rapport à l'autre et sont dimensionnés de manière à ce qu'on puisse glisser au choix un premier tuyau d'évacuation (24) de plus petit diamètre ou un deuxième tuyau d'évacuation (24) de plus grand diamètre sur le tronc intérieur (22) ou sur le tronc extérieur (21).

20. Dispositif d'évacuation selon une des revendications 14 à 19, **caractérisé en ce qu'**il est prévu un tuyau d'évacuation (25) qui peut être glissé de manière ajustée à l'extérieur sur le tronc axial (12a) du moyen support (12).

21. Dispositif d'évacuation selon une des revendications 14 à 20, **caractérisé en ce qu'**un joint, de préférence un joint à lèvre (31), peut être posé sur le bord supérieur de la pièce tubulaire, lequel joint étant apte à colmater sur la paroi extérieure d'une cuve d'évacuation (30) pouvant être insérée concentriquement mais avec un certain écart dans la pièce tubulaire.

22. Dispositif d'évacuation selon une des revendications 14 à 21, **caractérisé en ce que** le dispositif d'évacuation comprend une pièce d'aide au remplissage de forme annulaire (32).

23. Dispositif d'évacuation selon la revendication 22, **caractérisé en ce que** la pièce d'aide au remplissage (32) peut être poussée sur le support (12a) vers une position en dessous du plateau (12b), la pièce d'aide au remplissage (32) débordant de préférence un peu du plateau (12b) radialement vers l'extérieur.

24. Dispositif d'évacuation selon la revendication 22, **caractérisé en ce que** la pièce d'aide au remplissage (32) est disposée entre le plateau (12b) et la pièce tubulaire et est reliée à ces éléments par la masse anti-feu (13), la pièce d'aide au remplissage (32) débordant de préférence un peu du plateau (12b) radialement vers l'extérieur.

25. Dispositif d'évacuation selon une des revendications 22 à 24, **caractérisé en ce que** la pièce d'aide au remplissage (32) est composée d'une matière souple.

26. Dispositif d'évacuation selon une des revendications 22 à 25, **caractérisé en ce que** la pièce d'aide au remplissage (32) est pourvue de trous et/ou de fentes (33).

27. Dispositif d'évacuation selon une des revendications 14 à 26, **caractérisé en ce que** le dispositif d'évacuation comprend un manchon d'isolation acoustique (40) qui peut être disposé entre une zone supérieure de la cuve d'évacuation, (20) de type bride s'étendant radialement vers l'extérieur, et le sol ou le plafond.
